# FASCICULE DE BREVET EUROPEEN

(11) **EP 4 540 447 B1**
(45) Date de publication et mention de la délivrance du brevet: **26.11.2025**
(21) Numéro de dépôt: 23734553.3
(22) Date de dépôt: 20.06.2023
(51) Int. Cl.: D04H 1/4209, B29C 35/04, B29C 35/06, D04H 1/4218, D04H 1/4226, D04H 1/645, F27B 9/10, F27B 9/24, F27D 17/00

(54) **SYSTÈME ET PROCÉDÉ DE RÉTICULATION D'UN MATELAS CONTINU DE FIBRES MINÉRALES ET/OU VÉGÉTALES**
SYSTEM UND VERFAHREN ZUR VERNETZUNG EINER KONTINUIERLICHEN MATTE AUS MINERAL- UND/ODER PFLANZENFASERN
SYSTEM AND METHOD FOR CROSSLINKING A CONTINUOUS MAT OF MINERAL AND/OR VEGETABLE FIBERS

(30) Priorité: 20.06.2022 FR 2206039
(43) Date de publication de la demande: 23.04.2025
(73) Titulaire: Saint-Gobain Isover, 92400 Courbevoie (FR)
(72) Inventeur: BAUDOUIN, Bernard, 92400 COURBEVOIE (FR); CHARREL, Michael, 71100 CHALON-SUR-SAÔNE (FR)
(74) Mandataire: Saint-Gobain Recherche
(86) Numéro de dépôt international: PCT/EP2023/066574
(87) Numéro de publication internationale: WO 2023/247498

(56) Documents cités:
- WO-A1-2016/203170
- FR-A1- 2 394 041
- FR-A1- 3 112 595

## Description

### Technique antérieure

La présente invention appartient au domaine général de la fabrication de produits d'isolation thermique et/ou acoustique. Elle concerne plus particulièrement un système de réticulation d'un matelas continu de fibres minérales et/ou végétales, en particulier de laine minérale, de type laine de verre ou de roche. Un tel matelas est destiné à être découpé pour former ensuite, par exemple, des panneaux ou rouleaux d'isolation thermique et/ou acoustique. L'invention concerne également un procédé de réticulation mis en œuvre au moyen d'un tel système de réticulation.

De manière conventionnelle, la fabrication de matelas de fibres isolantes comprend primairement le fibrage et le dépôt de fibres sur un convoyeur ou transporteur mobile perforé. L'amas de fibres néoformé est plaqué sur le convoyeur à l'aide de caissons d'aspiration agencés sous le transporteur sur lequel elles sont déposées. Lors du fibrage, un liant est pulvérisé à l'état de solution ou suspension dans un liquide volatil tel que l'eau sur les fibres étirées, ce liant ayant des propriétés d'adhésivité et comprenant d'habitude une matière durcissable à chaud, comme une résine thermodurcissable.

La couche primaire de fibres relativement lâches sur le convoyeur collecteur est ensuite transférée à un dispositif de chauffage appelé communément dans le domaine en cause étuve de réticulation. Le matelas continu de fibres traverse l'étuve sur toute sa longueur, grâce à des convoyeurs en regard l'un au-dessus de l'autre, pressant le matelas entre eux, et dont la distance d'écartement est réglable. Un tel matelas présente ainsi une densité plus ou moins importante en fonction du degré de la compression exercée par les deux convoyeurs dans l'étuve.

Pendant son passage dans l'étuve, le matelas est simultanément asséché et soumis à un traitement thermique spécifique qui provoque la polymérisation (ou « durcissement ») de la résine thermodurcissable du liant présent à la surface des fibres.

Le mode opératoire utilisé pour provoquer le durcissement du liant consiste à faire passer de l'air chauffé à travers toute l'épaisseur du matelas, de telle façon que le liant présent dans toute l'épaisseur du matelas soit lui-même porté progressivement à une température supérieure à sa température de durcissement.

A cette fin, l'étuve de réticulation est composée d'une enceinte constituant une chambre fermée dans laquelle sont disposés une série de caissons. Chaque caisson est alimenté en air chaud par une chambre de combustion à laquelle est attachée au moins un brûleur ainsi que des ventilateurs permettant respectivement d'alimenter en air ledit au moins brûleur et de mettre en circulation l'air chaud produit par celui-ci.

Chaque caisson définit ainsi une zone indépendante de chauffage, dans laquelle sont réglées des conditions spécifiques de chauffage. Les caissons sont séparés par des parois présentant des ouvertures pour le matelas et les convoyeurs supérieurs et inférieurs. L'utilisation d'une pluralité de caissons permet avantageusement une élévation graduée et mieux contrôlée de la température du matelas tout au long de sa traversée de l'étuve et évite l'apparition de points chauds dus à un chauffage localement trop important, ou alternativement la présence au sein du matelas de zones dans lesquelles le liant n'aurait pas été entièrement polymérisé.

Il est connu du document FR 2 394 041 A1 une étuve de chauffage constituée de caissons pressurisés traversés par au moins deux convoyeurs complémentaires de transport et de calibrage à palettes perforées entre lesquels on fait circuler à faible vitesse des gaz à température voulue.

Il est, en outre, connu du document FR 3 112 595 A1, une étuve configurée pour former un tapis de fibres minérales par cuisson d'un liant encollant un matériau minéral disposé sur un convoyeur, l'étuve comprenant en série sur le trajet du convoyeur, une entrée, une pluralité de caissons de chauffe et une sortie.

En pratique, le fonctionnement et l'utilisation d'une étuve de réticulation sont soumis à différentes contraintes. Parmi ces contraintes, celle de la sécurité d'exploitation est prégnante, et constitue un cadre réglementaire qui s'impose à chaque exploitant. En particulier, il convient d'être en mesure de maîtriser plusieurs risques, dont le risque d'accumulation de chaleur au sein de l'étuve, mais aussi, d'autre part, le risque explosif liés à la production de substances inflammables (comme par exemple des composés organiques volatils) lors des opérations de réticulation.

A ces contraintes classiques de sécurité s'ajoutent aujourd'hui d'autres contraintes. En effet, les étuves de réticulation utilisées jusqu'à présent consomment une quantité importante d'énergie. Cette énergie consommée provient quasi essentiellement du gaz nécessaire aux brûleurs pour alimenter en air chaud les caissons de chauffage. La fabrication de matelas de fibres isolantes représente donc une activité particulièrement émettrice en termes de gaz à effet de serre, comme typiquement le CO2, ce qui se révèle problématique au regard des enjeux actuels de préservation de l'environnement, mais également de maîtrise des coûts de production (le prix du gaz pouvant être sujet à de fortes variations).

### Exposé de l'invention

La présente invention a pour objectif de remédier à tout ou partie des inconvénients de l'art antérieur, notamment ceux exposés ci-avant, en proposant une solution qui permette de fabriquer, de manière sécurisée, un matelas de fibres isolantes en diminuant la quantité de gaz consommé en comparaison avec les solutions de l'état de la technique, et tout en conservant un excellent rendement énergétique. La présente invention permet donc notamment de répondre à des contraintes actuelles de préservation de l'environnement en ce qu'elle offre la possibilité de limiter le rejet de gaz à effet de serre lors de la fabrication d'un matelas de fibres isolantes.

A cet effet, et selon un premier aspect, l'invention concerne un système de réticulation d'un matelas continu de fibres minérales et/ou végétales, tel que défini dans la revendication 1.

Les fibres végétales sont de préférence choisies dans le groupe constitué des fibres lignocellulosiques et des fibres de coton. Les fibres lignocellulosiques sont de préférence choisies parmi les fibres de bois, fibres de chanvre, fibres de lin, fibres de sisal, fibres de coton, fibres de jute, fibres de coco, fibres de raphia, fibres d'abaca, paille de céréales ou paille de riz.

Ainsi, l'air chaud injecté dans une chambre de combustion au moyen du système d'injection se substitue à une partie de l'air chaud qui serait produite (nominalement) par au moins un brûleur sans apport externe d'énergie (i.e. l'air chaud circulant dans un caisson de chauffage et produit exclusivement à partir de gaz utilisé par au moins un brûleur, ou encore dit autrement, l'air chaud produit par au moins un brûleur avant que le système d'injection ne soit mis en fonctionnement).

Il est à noter qu'au sens de la présente invention, le terme « fraction » fait référence à une fraction strictement inférieure à 100%. Dit encore autrement, l'invention est mise en œuvre en garantissant que le ou les brûleurs de chaque caisson de chauffage destinés à recevoir de l'air chaud en provenance du système d'injection continuent à fonctionner. De telles dispositions sont avantageuses puisque la préservation d'une flamme de brûleur permet d'éviter tout risque explosif lié à une accumulation de gaz inflammables.

Le choix de la valeur de ladite fraction peut dépendre de la manière dont le système de réticulation se destine à être exploité. A titre d'exemple nullement limitatif, la valeur de la fraction peut être fixée de sorte que le débit d'air chaud injecté via ledit système d'injection remplace (se substitue à) une partie du débit nominal de circulation d'air chaud au sein dudit au moins un caisson de chauffage. Bien entendu, le pilotage du système d'injection, et donc a fortiori le choix de la valeur de ladite fraction, peut être effectué suivant encore d'autres considérations, comme par exemple des considérations en termes d'énergie ou de puissance apportée par au moins un brûleur dudit au moins un caisson de chauffage (i.e. on vise à remplacer (substituer) une partie de cette énergie/puissance grâce à l'air chaud injecté avec le système d'injection).

D'une manière générale, la sécurité de fonctionnement de l'étuve de réticulation est garantie grâce à cet apport d'air chaud qui balaie le ou les caissons de chauffage.

De plus, en apportant ainsi de l'air chaud depuis l'extérieur de l'étuve de réticulation, l'invention offre la possibilité avantageuse de limiter la consommation de gaz, et donc en définitive de limiter le rejet de gaz à effet de serre (exemple : air chaud produit à partir d'électricité dite « verte », i.e. électricité produite à partir d'une énergie rejetant peu de CO2, comme par exemple les énergies renouvelables ou bien encore l'énergie nucléaire).

Les inventeurs ont notamment estimé que le besoin en gaz d'une étuve de réticulation pouvait être réduite de 50% à 70% grâce à l'invention, ce qui induit une quantité substantielle de gaz à effet de serre non rejeté dans l'atmosphère.

Les inventeurs ont en outre constaté que cette substitution d'une partie du gaz par de l'air chaud produit par le système d'injection avait un impact très faible sur le rendement énergétique généralement obtenu lors de la fabrication du matelas (typiquement une baisse de 3% à 4% essentiellement due à des pertes de chaleur au niveau des parois entre le système d'injection et l'étuve de réticulation).

Encore un autre avantage de l'invention se situe dans le fait que le système d'injection peut être installé facilement sur un parc existant. Par exemple, le système d'injection peut être positionné au sol à côté de l'enceinte de l'étuve de réticulation, ou bien encore en hauteur, par exemple sur une passerelle dédiée.

Qui plus est, la position extérieure du système d'injection permet de préserver ce dernier de toute pollution (exemple : dégagement de particules) générée par l'étuve de réticulation, une telle pollution pouvant être à l'origine d'un encrassement fatal à son fonctionnement.

Dans des modes particuliers de réalisation, le système de réticulation peut comporter en outre l'une ou plusieurs des caractéristiques suivantes, prises isolément ou selon toutes les combinaisons techniquement possibles.

Dans des modes particuliers de réalisation, ladite fraction est comprise entre 2% et 40%, par exemple entre 5% et 30%, plus particulièrement entre 5% et 20%, voire entre 7% et 20% ou préférentiellement entre 5% et 15%, encore plus préférentiellement entre 10% et 15%.

Dans des modes particuliers de réalisation, ladite température donnée est comprise entre 350°C et 1000°C, par exemple entre 500°C et 1000°C, plus particulièrement comprise entre 700°C et 800°C, encore plus particulièrement sensiblement égale à 750°C.

Dans des modes particuliers de réalisation, les moyens de chauffage comportent au moins une batterie électrique dont la puissance est comprise entre 100 kW et 900 kW, plus particulièrement entre 500 kW et 700 kW, par exemple sensiblement égale à 600 kW.

Dans des modes particuliers de réalisation, le système d'injection est alimenté en air préchauffé.

Dans des modes particuliers de réalisation, au moins une partie de l'air préchauffé provient d'un four de fusion de verre et/ou correspond à de l'air chaud de récupération.

Dans des modes particuliers de réalisation, le système d'injection est connecté à une évacuation d'urgence d'air chaud positionnée entre ledit système d'injection et ladite étuve de réticulation.

Dans des modes particuliers de réalisation, le système d'injection est configuré pour injecter de l'air chaud provenant de l'extérieur de l'étuve de réticulation.

Dans des modes de réalisation particuliers, le système d'injection comporte une conduite d'apport d'air chaud agencée entre une source d'air chaud agencée à l'extérieur de l'étuve de réticulation et l'au moins une chambre de combustion.

Selon un deuxième aspect, l'invention concerne une ligne de fabrication d'un matelas continu de fibres minérales et/ou végétales, comprenant une unité de fibrage d'un matelas continu de fibres minérales et/ou végétales, un convoyeur de transport du matelas ainsi qu'un système de réticulation selon l'invention.

Selon un troisième aspect, l'invention concerne un procédé de réticulation d'un matelas continu de fibres minérales et/ou végétales, ledit procédé étant mis en œuvre au moyen d'un système de réticulation selon l'invention.

Selon un quatrième aspect, l'invention concerne un procédé de fabrication d'un matelas continu de fibres minérales et/ou végétales, ledit procédé étant mis en œuvre au moyen d'une ligne de fabrication selon l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 représente schématiquement, dans son environnement, un mode particulier de réalisation d'une ligne de fabrication d'un matelas continu de fibres minérales selon l'invention ;
[Fig. 2] la figure 2 représente schématiquement un mode particulier de réalisation d'un système de réticulation selon l'invention appartenant à la ligne de fabrication de la figure 1.

### Description de modes de réalisation

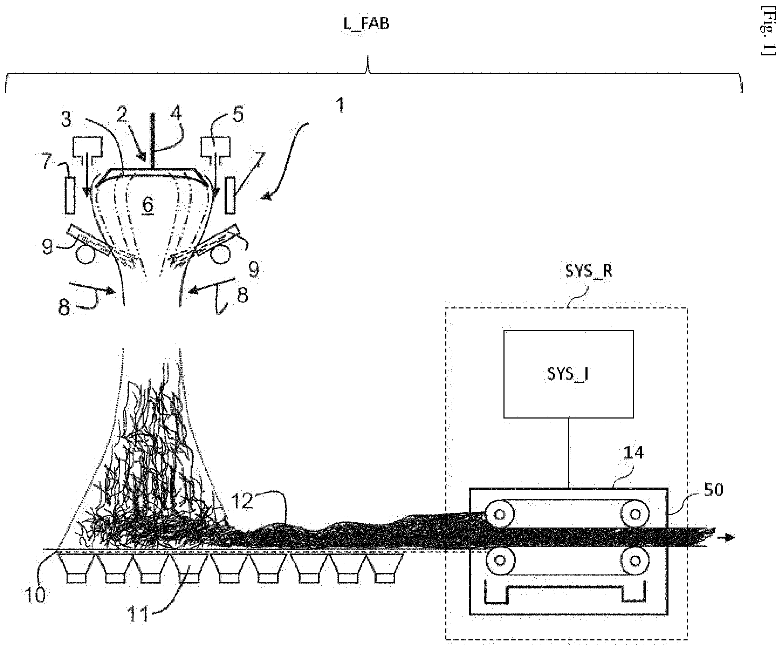

La figure 1 représente schématiquement, dans son environnement, un mode particulier de réalisation d'une ligne de fabrication L_FAB selon l'invention.

La ligne de fabrication L_FAB est configurée pour la fabrication d'un matelas continu de fibres minérales, plus particulièrement à base de laine de verre, étant entendu que la ligne L_FAB est de tout type adapté pour la production de produits à base de fibres minérales et éventuellement végétales. Les premières étapes de fabrication dudit matelas sont également décrites en référence à la figure 1.

De manière conventionnelle, la ligne de fabrication L_FAB comporte une unité de fibrage 1 configuré pour mettre en œuvre un procédé de fibrage par centrifugation interne connu en soi. L'unité de fibrage 1 comporte une hotte (non représentée sur la figure 1) surmontée d'au moins un centrifugeur 2. Chaque centrifugeur 2 comprend un panier (non représenté sur la figure 1) pour la récupération d'un filet de verre de fibrage préalablement fondu et une pièce 3 en forme d'assiette dont la paroi périphérique est munie d'un grand nombre d'orifices.

En fonctionnement, le verre fondu, amené en un filet 4 depuis un four de fusion (non représenté) et d'abord récupéré dans le panier du centrifugeur 2, s'échappe par les orifices de l'assiette 3 sous la forme d'une multitude de filaments entraînés en rotation. Le centrifugeur 2 est par ailleurs entouré par un brûleur annulaire 5 qui crée à la périphérie de la paroi du centrifugeur 2 un courant gazeux à grande vitesse et à température suffisamment élevée pour étirer les filaments de verre en fibres sous la forme d'un voile 6.

Des moyens de chauffage 7, par exemple du type inducteur(s), servent à maintenir le verre et le centrifugeur 2 à la bonne température. Le voile 6 est refermé par un courant gazeux d'air introduit sous pression, schématisé par les flèches 8 sur la figure 1. Le tore 6 ainsi créé est entouré par un dispositif de pulvérisation de l'encollage contenant un liant thermodurcissable en solution aqueuse, dont seuls deux éléments 9 sont représentés sur la figure 1.

Il s'agit par exemple d'un liant phénolique ou un liant alternatif à faible teneur en formaldéhyde, de préférence même sans formaldéhyde, liant parfois qualifié de « liant vert », notamment lorsqu'il est au moins partiellement issu d'une base de matière première renouvelable, en particulier végétale, notamment du type à base de sucres hydrogénés ou non.

Le fond de la hotte de fibrage est constitué par un dispositif de réception des fibres comprenant un convoyeur incorporant une bande sans fin 10 perméable aux gaz et à l'eau, sous laquelle sont disposés des caissons d'aspiration 11 des gaz tels que l'air, les fumées et les compositions aqueuses excédentaires issues du processus de fibrage précédemment décrit. Il se forme ainsi sur la bande 10 du convoyeur un matelas 12 de fibres de laine de verre mélangées intimement avec la composition d'encollage. Le matelas 12 est conduit par le convoyeur 10 jusqu'à un système de réticulation SYS_R selon l'invention.

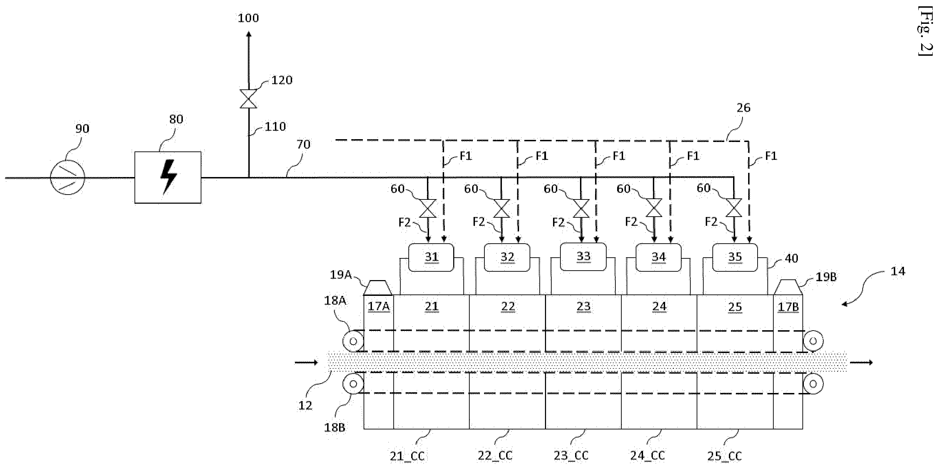

La figure 2 représente schématiquement un mode particulier de réalisation du système de réticulation SYS_R appartenant à la ligne de fabrication L_FAB de la figure 1.

Tel qu'illustré par la figure 2, le système de réticulation SYS_R comporte une étuve 14 de réticulation du liant thermodurcissable. L'étuve de réticulation 14 comprend une série de caissons de chauffage séparés les uns des autres par des parois isolantes.

Plus particulièrement, dans le mode de réalisation décrit ici, les caissons de chauffage 21-25 sont au nombre de cinq.

L'utilisation d'une pluralité de caissons permet la montée en température progressive du matelas de fibres 12 jusqu'à une température supérieure à la température de durcissement du liant présent sur les fibres du matelas 12. Du parfait contrôle de la température dans les différents caissons dépendent les propriétés mécaniques du produit final, notamment si un liant vert est utilisé, comme indiqué précédemment.

Le fait de considérer cinq caissons ne constitue cependant pas une limitation de l'invention. D'une manière générale, aucune limitation n'est attachée à cet aspect.

Chaque caisson 21-25 comprend un compartiment central 21_CC-25_CC formant une enceinte dudit caisson et entouré par un matériau d'isolation.

L'enceinte de chaque caisson 21-25 est traversée par deux convoyeurs 18A, 18B de transport et de calibrage du matelas 12. Ces convoyeurs 18A, 18B sont par exemple mis en rotation par des moteurs placés au sol (non représentés sur les figures), et sont formés de façon bien connue par une succession de palettes constituées de grilles articulées entre elles et perforées pour être perméables aux gaz.

Tout en assurant le passage des gaz chauds favorisant la prise rapide du liant, les convoyeurs 18A, 18B compriment habituellement le matelas 12 pour lui donner l'épaisseur souhaitée.

A titre d'exemple, pour un panneau roulé, celle-ci est typiquement comprise entre 10 et 450 mm, la densité de la couche de laine de verre étant par exemple comprise entre 5 et 150 kg/m3. On distingue ainsi par exemple les produits dits de faible densité, pour lesquels la masse volumique varie entre 5 et 20 kg/m3 et les produits dits de forte densité, dans lesquels la densité varie entre 20 et 150 kg/m3.

Le matelas de laine minérale 12 aspergé de liant entre d'abord dans un sas 17A d'entrée pourvu d'une hotte 19A d'évacuation des fumées, cette hotte 19A étant reliée à un circuit dédié de traitement desdites fumées (non représenté sur les figures). Dans ce premier sas d'entrée 17A, l'air chaud introduit dans le matelas 12 permet en premier lieu la vaporisation de l'eau résiduelle présente dans le matelas de fibres 12.

Les fumées supplémentaires générées dans les caissons 21-25 sont quant à elles généralement évacuées dans un sas de sortie 17B, via une hotte 19B.

Il importe de noter que le fait d'envisager des hottes 19A et 19B agencées en entrée et sortie du système de réticulation SYS_R ne constitue qu'une variante d'implémentation de l'invention. Toute autre variante connue de l'homme du métier peut être envisagée, comme par exemple une variante selon laquelle une hotte est agencée sensiblement au centre de l'étuve de réticulation 14.

De manière conventionnelle, et tel qu'illustré par la figure 2, chaque caisson de chauffage 21-25 est relié à (i.e. est en communication fluidique avec) une chambre de combustion 31-35. Chaque chambre de combustion 31-35 fournit en air chaud le caisson de chauffage 21-25 qui lui est associé, cet air chaud étant produit par un brûleur (non représenté sur la figure 2) attaché à ladite chambre de combustion 31-35 (étant entendu que le corps du brûleur est situé en dehors de la chambre de combustion) ainsi que mis en circulation au moyen de ventilateurs (non représentés sur la figure 2).

Il est à noter qu'il est considéré ici que chaque chambre de combustion 31-35 est équipé d'un unique brûleur. Bien entendu, ces dispositions ne sont en aucun cas limitatives de l'invention, chaque chambre de combustion 31-35 pouvant être équipée d'un ou plusieurs brûleurs, comme cela est bien connu de l'homme du métier.

Chaque brûleur est alimenté en gaz et en air de combustion à partir d'une conduite de gaz 26, de sorte à produire de l'air chaud destiné au caisson de chauffage 21-25 relié avec la chambre de combustion 31-35 avec laquelle coopère ledit brûleur. Cette alimentation en gaz est symbolisée sur la figure 2 aux moyens des flèches F1.

A titre d'exemple nullement limitatif, la température de réglage d'une chambre de combustion 31-35 est comprise entre 200°C et 250°C (voire jusqu'à 300°C), par exemple égale à 210°C, 215°C, 225°C, etc.

Dans le mode de réalisation décrit en référence à la figure 2, chaque caisson de chauffage 21-25 comporte un circuit de recirculation d'air chaud en communication fluidique avec la chambre de combustion 31-35. Ce circuit de recirculation est par exemple envisagé en coopération avec au moins une turbine radiale apte à l'aspiration d'air chaud et/ou avec des moyens de chauffage additionnels positionnés au sein de l'enceinte 31-35 du caisson de chauffage 21-25. Une telle mise en œuvre est par exemple décrite en détails dans le document WO2016203170. Il est à noter que seule une partie du circuit de recirculation est illustrée sur la figure 2 sous la forme d'une gaine de recirculation 40.

Bien qu'il soit considéré ici que la circulation d'air chaud est réalisée au moyen d'un circuit de recirculation, il importe de noter qu'il ne s'agit là que d'une variante d'implémentation de l'invention. Ainsi, rien n'exclut d'envisager encore d'autres modes de réalisation, comme par exemple des modes dans lesquels l'air chaud est introduit au sein d'un caisson de chauffage 21-25 par le bas (respectivement le haut) et est évacué par le haut (respectivement par le bas), la circulation de l'air chaud au sein du caisson de chauffage 21-25 étant alors réalisée par un système de hottes d'entrée et de sortie. Une telle mise en œuvre est également décrite dans le document WO2016203170 mentionné ci-avant.

L'étuve de réticulation 14 comprend, de manière classique, une enveloppe d'isolation extérieure 50 (uniquement représentée sur la figure 1 dans un souci de clarté de représentation) entourant l'ensemble des caissons 21-25, faite dans un matériau isolant telle que la laine minérale. Le plus souvent, cette enveloppe d'isolation extérieure 50 entoure elle-même une première enceinte métallique (non représenté sur les figures) permettant d'assurer l'étanchéité de l'ensemble de l'installation, de telle manière que les gaz pollués ne puissent être évacués en sortie du dispositif que par les hottes 19B et 19A.

Conformément à l'invention, le système de réticulation SYS_R comporte, outre l'étuve de réticulation 14, un système dit « d'injection » SYS_I agencé à l'extérieur de ladite étuve 14.

Par « agencé à l'extérieur de l'étuve 14 », il est fait référence ici au fait que le système d'injection SYS_I est positionné en dehors de l'enceinte 50 de l'étuve 14.

Fondamentalement, aucune limitation n'est attachée à la localisation du système SYS_I dès lors que ce dernier est situé à l'extérieur de l'étuve 14. Par exemple, le système SYS_I peut être positionné au sol à côté de l'enceinte de l'étuve 14, ou bien encore en hauteur, par exemple sur une passerelle dédiée.

Le système d'injection SYS_I est configuré pour injecter de l'air chaud dans au moins une chambre de combustion 31-35 (et donc a fortiori dans au moins un caisson de chauffage 21-25), l'air chaud ainsi injecté venant en remplacement d'une fraction donnée d'air chaud produit par le brûleur attaché (coopérant) avec ladite au moins une chambre de combustion 31-35.

Autrement dit, l'air chaud injecté dans une chambre de combustion 31-35 au moyen du système SYS_I se substitue à une partie de l'air chaud produit nominalement par les brûleurs (i.e. Par « nominalement », on fait référence ici à une situation dans laquelle l'air chaud circulant dans un caisson de chauffage 21-25 est produit exclusivement à partir de gaz utilisé par les brûleurs).

Plus particulièrement, dans le mode de réalisation décrit ici, la valeur de la fraction est fixée de sorte que le débit d'air chaud injecté via ledit système d'injection SYS_I remplace (se substitue à) une partie donnée du débit nominal de circulation d'air chaud au sein dudit au moins un caisson de chauffage 31-35.

Il est à noter qu'au sens de la présente invention, le terme « fraction » fait référence à une fraction strictement inférieure à 100%. Dit encore autrement, l'invention est mise en œuvre en garantissant que le brûleur de chaque caisson de chauffage 21-25 destiné à recevoir de l'air chaud en provenance du système SYS_I continue à fonctionner. De telles dispositions sont avantageuses puisque la préservation d'une flamme de brûleur permet d'éviter tout risque explosif lié à une accumulation de gaz inflammables.

L'air chaud du système d'injection SYS_I peut par exemple être injecté de sorte que ladite fraction est comprise entre 2% et 40%, selon un exemple plus spécifique entre 5% et 30%, plus particulièrement entre 5% et 20%, voire entre 7% et 20% ou préférentiellement entre 5% et 15%, encore plus préférentiellement entre 10% et 15%.

Le système d'injection SYS_I est configuré pour injecter de l'air chaud provenant de l'extérieur de l'étuve 14.

En d'autres termes, la source d'air chaud est extérieure à l'étuve 14.

L'air chaud injecté est distinct des gaz mis en recirculation par les circuits de recirculation des chambres de combustion 31-35.

Dans le mode de réalisation de la figure 2, le système d'injection SYS_I est configuré pour injecter de l'air chaud dans les circuits de recirculation de chacune des chambres de combustion 31-35, plus particulièrement en entrée desdites chambres de combustion 31-35. Cette injection d'air chaud est symbolisée sur la figure 2 aux moyens des flèches F2.

Le fait qu'il soit possible d'injecter de l'air chaud en entrée de chacune des chambres de combustion 31-35, au niveau des circuits de recirculation, ne signifie pas que cela soit le cas de manière permanente. Ainsi, et tel qu'illustré dans le mode de réalisation de la figure 2, le système d'injection SYS_I peut comporter des vannes d'équilibrage 60 agencées entre une conduite 70 d'apport d'air chaud du système SYS_I et lesdites chambres de combustion. Chaque vanne d'équilibrage 60 est pilotable, de sorte à permettre un apport d'air chaud pour tel ou tel chambre de combustion 31-35, par exemple pour une période de temps donnée. Le pilotage d'une ou plusieurs vannes d'équilibrage 60 peut par s'effectuer de manière automatique (i.e. de manière programmée).

L'entrée de la conduite 70 d'apport d'air chaud est en communication fluidique avec un extérieur de l'étuve 14.

La conduite 70 d'apport d'air chaud est configuré pour apporter de l'air chaud provenant de l'extérieur de l'étuve 14.

Bien entendu, il est également possible d'envisager des modes de réalisation dans lesquels une ou plusieurs chambres de combustion 31-35 ne sont pas reliées à la conduite 70, de sorte qu'elles ne peuvent pas être alimentées en air chaud en provenance du système SYS_I.

Dans le mode de réalisation de la figure 2, dans le but de produire l'air chaud destiné à être injecté en remplacement d'une fraction donnée d'air chaud produit par un brûleur, le système d'injection SYS_I comporte des moyens de chauffage électrique 80 configurés pour chauffer de l'air ambiant à une température donnée.

A titre d'exemple nullement limitatif, ladite température donnée est comprise entre 350°C et 1000°C, par exemple entre 500°C et 1000°C, plus particulièrement comprise entre 700°C et 800°C, encore plus particulièrement sensiblement égale à 750°C.

On note ici que les températures envisagées sont bien supérieures aux températures de réglage des chambres de combustion citées en exemple ci-avant, de sorte qu'en tenant compte des exemples de fraction d'injection également cités auparavant, l'injection d'air chaud réalisée au moyen du système SYS_I peut être vue comme un coup de « boost » thermique à faible volume apporté au niveau des chambres de combustion 31-35.

Les moyens de chauffage électrique 80 peuvent par exemple comporter au moins une batterie électrique dont la puissance est comprise entre 100 kW et 900 kW, plus particulièrement entre 500 kW et 700 kW, par exemple sensiblement égale à 600 kW, ladite au moins une batterie permettant de fournir de l'électricité, par exemple, à une ou plusieurs résistances électriques (non représentées sur les figures) aptes à chauffer l'air ambiant à la température souhaitée.

Dans un exemple plus particulier de réalisation, le nombre de batteries électriques est égal au nombre de caissons de chauffage de l'étuve 14.

Il apparaitra clairement à l'homme du métier que de telles valeurs de puissance électrique ne sont pas limitatives de l'invention. De la même manière, le nombre de batteries utilisées n'est pas limitatif de l'invention, ce nombre dépendant notamment de la température envisagée pour l'air chaud injecté mais aussi du volume/fraction d'air chaud à prendre en compte, ce dernier aspect étant lié au nombre de caissons de chauffage destiné à être connectés, via leurs chambres de combustion respectives, au système d'injection SYS_I.

Bien entendu, pour que l'air chaud produit par les moyens de chauffage électrique 80 soient acheminés vers les chambres de combustion 31-35, le système d'injection SYS_I comportent également des moyens de mise en circulation d'air 90.

Par exemple, et tel qu'illustré à titre nullement limitatif par la figure 2, lesdits moyens de mise en circulation d'air 90 comportent un ventilateur 90 configuré pour mettre en circulation l'air dans la conduite 70 d'apport d'air chaud.

Il est à noter que le fait de considérer des moyens de chauffage électrique 80, pour générer de l'air chaud, ne constitue qu'une variante d'implémentation de l'invention. A ce titre, d'autres variantes peuvent encore être envisagées pour obtenir de l'air chaud, éventuellement en combinaison avec l'utilisation desdits moyens de chauffage électrique 80.

Par exemple, il est possible d'envisager que le système d'injection SYS_I est alimenté en air préchauffé. Au moins une partie de l'air ainsi préchauffé peut par exemple provenir du four de fusion produisant le verre fondu destiné à l'unité de fibrage 1 (exemple : air chaud provenant de fumées produites par un four air-gaz, un four oxygaz, etc.) et/ou peut correspondre à de l'air chaud de récupération (exemple : air provenant d'un ou plusieurs compresseurs et/ou d'un ou plusieurs échangeurs agencés en dehors de l'étuve 14, etc.). D'une manière générale, tout air préchauffé issue d'une énergie fatale peut être envisagé.

Dans le mode de réalisation décrit ici, et tel qu'illustré par la figure 2, le système d'injection SYS_I est également connecté à une évacuation d'urgence 100 d'air chaud (encore appelée « cheminée de secours ») positionnée entre ledit système SYS_I et ladite étuve de réticulation 14. Plus particulièrement, et comme cela est illustré par la figure 2, la connexion entre le système SYS_I et l'évacuation d'urgence 100 s'effectue au moyen d'une conduite d'évacuation 110 équipée d'une vanne d'équilibrage 120. Une telle configuration est optionnelle, et présente l'avantage, tout particulièrement (mais non exclusivement) lorsque le système SYS_I est alimenté en air préchauffé, d'éviter toute accumulation de chaleur dommageable au fonctionnement du système de réticulation SYS_C.

Il est à noter que l'invention ne concerne pas uniquement le système de réticulation SYS_C ainsi que la ligne de fabrication L_FAB. En effet, l'invention vise également un procédé de réticulation du matelas 12 mis en œuvre au moyen du système de réticulation SYS_C. Ledit procédé de réticulation comporte notamment des étapes de chauffage du matelas 12 au sein de chacun des caissons de chauffage 21-25, étant entendu que tout ou partie de ces étapes de chauffage (selon que tout ou partie des caissons de chauffage 21-25 sont reliés au système SYS_I) sont exécutées en apportant de l'air chaud en provenance dudit système SYS_I.

Enfin, l'invention vise également un procédé de fabrication du matelas 12 mis en œuvre par la ligne de fabrication L_FAB. Ce procédé de fabrication comporte notamment les premières étapes de fabrication déjà décrites ci-avant en référence à la figure 1 ainsi que les étapes mises en œuvre dans le cadre du procédé de réticulation susmentionné.

## Revendications

1. Système de réticulation (SYS_R) d'un matelas continu de fibres minérales et/ou végétales, comprenant une étuve de réticulation (14) dudit matelas comportant au moins un caisson de chauffage, chaque caisson de chauffage étant relié à une chambre de combustion, ledit système de réticulation étant **caractérisé en ce qu'**il comporte en outre un système dit « d'injection » (SYS_I) agencé à l'extérieur de l'étuve de réticulation et configuré pour injecter de l'air chaud dans au moins une chambre de combustion d'un caisson de chauffage, l'air chaud ainsi injecté venant en remplacement d'une fraction donnée d'air chaud produit par au moins un brûleur attaché à ladite au moins une chambre de combustion, le système d'injection (SYS_I) comportant des moyens de chauffage, par exemple des moyens de chauffage électrique (80), configurés pour chauffer de l'air ambiant à une température donnée.

2. Système de réticulation (SYS_R) selon la revendication 1, dans lequel ladite fraction est comprise entre 2% et 40%, par exemple entre 5% et 30%, plus particulièrement entre 5% et 20%, voire entre 7% et 20% ou préférentiellement entre 5% et 15%, encore plus préférentiellement entre 10% et 15%.

3. Système de réticulation (SYS_R) selon la revendication 1 ou 2, dans lequel ladite température donnée est comprise entre 350°C et 1000°C, par exemple entre 500°C et 1000°C, plus particulièrement comprise entre 700°C et 800°C, encore plus particulièrement sensiblement égale à 750°C.

4. Système de réticulation (SYS_R) selon l'une quelconque des revendications 1 à 3, dans lequel les moyens de chauffage comportent au moins une batterie électrique dont la puissance est comprise entre 100 kW et 900 kW, plus particulièrement entre 500 kW et 700 kW, par exemple sensiblement égale à 600 kW.

5. Système de réticulation (SYS_R) selon l'une quelconque des revendications 1 à 4, dans lequel le système d'injection est alimenté en air préchauffé.

6. Système de réticulation (SYS_R) selon la revendication 5, dans lequel au moins une partie de l'air préchauffé provient d'un four de fusion de verre et/ou correspond à de l'air chaud de récupération.

7. Système de réticulation (SYS_R) selon l'une quelconque des revendications 1 à 6, dans lequel le système d'injection est connecté à une évacuation d'urgence d'air chaud (100) positionnée entre ledit système d'injection (SYS_I) et ladite étuve de réticulation (14).

8. Système de réticulation (SYS_R) selon l'une quelconque des revendications 1 à 7, dans lequel le système d'injection (SYS_I) est configuré pour injecter de l'air chaud provenant de l'extérieur de l'étuve de réticulation (14).

9. Système de réticulation (SYS_R) selon l'une quelconque des revendications 1 à 8, dans lequel le système d'injection (SYS_I) comporte une conduite (70) d'apport d'air chaud agencée entre une source d'air chaud agencée à l'extérieur de l'étuve de réticulation (14) et l'au moins une chambre de combustion.

10. Ligne de fabrication (L_FAB) d'un matelas continu de fibres minérales et/ou végétales, comprenant une unité de fibrage (1) d'un matelas continu de fibres minérales et/ou végétales, un convoyeur de transport du matelas ainsi qu'un système de réticulation (SYS_R) selon l'une quelconque des revendications 1 à 9.

11. Procédé de réticulation d'un matelas continu de fibres minérales et/ou végétales, ledit procédé étant mis en œuvre au moyen d'un système de réticulation (SYS_R) selon l'une quelconque des revendications 1 à 9.

12. Procédé de fabrication d'un matelas continu de fibres minérales et/ou végétales, ledit procédé étant mis en œuvre au moyen d'une ligne de fabrication (L_FAB) selon la revendication 10.

## Patentansprüche

1. Vernetzungssystem (SYS_R) für eine durchgehende Matte aus Mineral- und/oder Pflanzenfasern, umfassend einen Ofen (14) zum Vernetzen der Matte, der mindestens einen Heizkasten aufweist, wobei jeder Heizkasten mit einer Verbrennungskammer verbunden ist, wobei das Vernetzungssystem
**dadurch gekennzeichnet ist, dass** es ferner ein sogenanntes "Injektionssystem" (SYS_I) aufweist, das außerhalb des Vernetzungsofens angeordnet und zum Injizieren von Warmluft in mindestens eine Verbrennungskammer eines Heizkastens konfiguriert ist, wobei die so injizierte Warmluft einen gegebenen Anteil an Warmluft ersetzt, die durch mindestens einen Brenner erzeugt wird, der an der mindestens einen Verbrennungskammer angebracht ist, das Injektionssystem (SYS_I) Heizmittel aufweist, zum Beispiel elektrische Heizmittel (80), die zum Erhitzen der Umgebungsluft auf eine gegebene Temperatur konfiguriert sind.

2. Vernetzungssystem (SYS_R) nach Anspruch 1, wobei der Anteil zwischen 2 % und 40 % liegt, zum Beispiel zwischen 5 % und 30 %, insbesondere zwischen 5 % und 20 %, oder sogar zwischen 7 % und 20 % oder vorzugsweise zwischen 5 % und 15 %, noch mehr bevorzugt zwischen 10 % und 15 %.

3. Vernetzungssystem (SYS_R) nach Anspruch 1 oder 2, wobei die gegebene Temperatur zwischen 350 °C und 1000 °C liegt, zum Beispiel zwischen 500 °C und 1000 °C, insbesondere zwischen 700 °C und 800 °C, ganz besonders im Wesentlichen gleich 750 °C ist.

4. Vernetzungssystem (SYS_R) nach einem der Ansprüche 1 bis 3, wobei die Heizmittel mindestens eine elektrische Batterie aufweisen, deren Leistung zwischen 100 kW und 900 kW liegt, insbesondere zwischen 500 kW und 700 kW, zum Beispiel im Wesentlichen gleich 600 kW ist.

5. Vernetzungssystem (SYS_R) nach einem der Ansprüche 1 bis 4, wobei das Injektionssystem mit vorerhitzter Luft versorgt wird.

6. Vernetzungssystem (SYS_R) nach Anspruch 5, wobei mindestens ein Teil der vorerhitzten Luft von einem Glasschmelzofen stammt und/oder Rückgewinnungswarmluft entspricht.

7. Vernetzungssystem (SYS_R) nach einem der Ansprüche 1 bis 6, wobei das Injektionssystem an eine Warmluftnotabsaugung (100) angeschlossen ist, die zwischen dem Injektionssystem (SYS_I) und dem Vernetzungsofen (14) positioniert ist.

8. Vernetzungssystem (SYS_R) nach einem der Ansprüche 1 bis 7, wobei das Injektionssystem (SYS_I) zum Injizieren von Warmluft konfiguriert ist, die von außerhalb des Vernetzungsofens (14) stammt.

9. Vernetzungssystem (SYS_R) nach einem der Ansprüche 1 bis 8, wobei das Injektionssystem (SYS_I) eine Warmluftzufuhrleitung (70) aufweist, die zwischen einer Warmluftquelle, die außerhalb des Vernetzungsofens (14) angeordnet ist, und der mindestens einen Verbrennungskammer angeordnet ist.

10. Fertigungslinie (L_FAB) für eine durchgehende Matte aus Mineral- und/oder Pflanzenfasern, umfassend eine Einheit (1) zum Zerfasern der durchgehenden Matte aus Mineral- und/oder Pflanzenfasern, einen Förderer zum Transportieren der Matte sowie ein Vernetzungssystem (SYS_R) nach einem der Ansprüche 1 bis 9.

11. Verfahren zum Vernetzen einer durchgehenden Matte aus Mineral- und/oder Pflanzenfasern, wobei das Verfahren mittels eines Vernetzungssystems (SYS_R) nach einem der Ansprüche 1 bis 9 implementiert wird.

12. Verfahren zum Fertigen einer durchgehenden Matte aus Mineral- und/oder Pflanzenfasern, wobei das Verfahren mittels einer Fertigungslinie (L_FAB) nach Anspruch 10 implementiert wird.

## Claims

1. A crosslinking system (SYS_R) for a continuous mat of mineral and/or plant fibers, comprising a crosslinking oven (14) for said mat including at least one heating box, each heating box being connected to a combustion chamber, said crosslinking system being **characterized in that** it comprises a so-called "injection" system (SYS_I) arranged outside the crosslinking oven and configured to inject hot air into at least one combustion chamber of a heating box, the hot air thus injected replacing a given fraction of hot air produced by at least one burner attached to said at least one combustion chamber, the injection system (SYS_I) comprises heating means, for example electrical heating means (80), configured to heat ambient air to a given temperature.

2. The crosslinking system (SYS_R) according to claim 1, wherein said fraction is between 2% and 40%, for example between 5% and 30%, more particularly between 5% and 20%, or even between 7% and 20% or preferentially between 5% and 15%, even more preferentially between 10% and 15%.

3. The crosslinking system (SYS_R) according to claim 1 or 2, wherein said given temperature is between 350°C and 1000°C, for example between 500°C and 1000°C, more particularly between 700°C and 800°C, still more particularly substantially equal to 750°C.

4. The crosslinking system (SYS_R) according to any one of claims 1 to 3, wherein the heating means comprise at least one electric battery whose power is between 100 kW and 900 kW, more particularly between 500 kW and 700 kW, for example substantially equal to 600 kW.

5. The crosslinking system (SYS_R) according to any one of claims 1 to 4, wherein the injection system is supplied with preheated air.

6. The crosslinking system (SYS_R) according to claim 5, wherein at least part of the preheated air comes from a glass melting furnace and/or corresponds to hot recovery air.

7. The crosslinking system (SYS_R) according to any one of claims 1 to 6, wherein the injection system is connected to a hot air emergency exhaust (100) positioned between said injection system (SYS_I) and said crosslinking oven (14).

8. The crosslinking system (SYS_R) according to any one of claims 1 to 7, wherein the injection system (SYS_I) is configured to inject hot air from outside the crosslinking oven (14).

9. The crosslinking system (SYS_R) according to any one of claims 1 to 8, wherein the injection system (SYS_I) comprises a hot air supply line (70) arranged between a hot air source arranged outside the crosslinking oven (14) and the at least one combustion chamber.

10. A manufacturing line (L_FAB) for a continuous mat of mineral and/or plant fibers, comprising a fiberizing unit (1) for a continuous mat of mineral and/or plant fibers, a conveyor for transporting the mat, and a crosslinking system (SYS_R) according to any one of claims 1 to 9.

11. A method for crosslinking a continuous mat of mineral and/or plant fibers, said method being carried out by means of a crosslinking system (SYS_R) according to any one of claims 1 to 9.

12. The method for manufacturing a continuous mat of mineral and/or plant fibers, said method being implemented by means of a manufacturing line (L_FAB) according to claim 10.
